# EUROPEAN PATENT APPLICATION

(11) **EP 1 065 253 A1**
(43) Date of publication of application: **03.01.2001**
(21) Application number: 99830416.6
(22) Date of filing: 30.06.1999
(51) Int. Cl.: C09K 3/10

(54) **Sealing gasket material in roll produced with the beater addition technique**

(71) Applicant: Omniafiltra Cartiera del Torano S.p.a., 80129 Napoli (IT)
(72) Inventor: Fronzoni, Gino, P.zza Vanvitelli, 15, 80129 Napoli (IT)

(57) **Abstract**

The subject-matter of this patent is the gasket material in rolls for thermohydraulic applications produced with the "beater addition" technique, which is the typical technology adopted by paper industries.

This material is produced as a roll in a single broad piece, with a width up to 2 m and thickness in the range 0.5 - 3 mm.

The considerable length of the roll allows a more efficient and economical subsequent processing.

The aforesaid material is a cellulose composite including mineral and non-organic fibers and fillers bonded with elastomers (NBR) and additives.

The item is designed to operate within the following limits:
- Operating temperature: 175°C; Operating pressure 50 bar non associated to operating temperature.

The material presents a wide chemical compatibility for a large class of chemical agents.

## Description

### 1. Prior art portion

The industrial production of gasket material is diversified according to whether it is employed in the automotive industries or in other industrial fields.

In the first case, depending on the specific operating conditions referred to automotive gaskets, the continuous production process known as beater addition has long been employed.

On the other hand, in the second case, the gasket material is produced with a discontinuous process, the output consisting of "discrete" sheets of maximal width of about 2 m. and limited length.

Such a technology consists of an extrusion process performed starting from the mixture of the raw materials carried out through calendering, yielding a sheet whose density ranges between 1.4-2.2 g/cm³.

This technology implicating the blending of specific chemical solvents with the raw material for each single formula, is referred to as IT-sheet.

For thermohydraulic applications, gasket materials produced in rolls with the beater addition technique are unknown.

### 2. Description

The subject-matter of this patent is the gasket material in rolls for thermohydraulic applications produced with the beater addition technique.

This material is produced as a roll in a single broad piece, in a width up to 2 m. , and a thickness in the range 0.5-3.0 mm..

The material is a cellulose composite including usually minerals, non-organic fibres and fillers bonded with elastomers (NBR), in order to ensure workability in beater addition processing.

The material, whose length depends on its thickness and on the production demand coming from customers, is produced with the above mentioned technique and wound in rolls.

The continuity of the material and the winding in rolls makes the subsequent processing more efficient and economical, in comparison to other materials produced through the traditional calender processing known as IT-sheet.

The gasket material, which is the subject-matter of this patent, is produced by the use of paper machines of the kind shown schematically in FIG. 1.

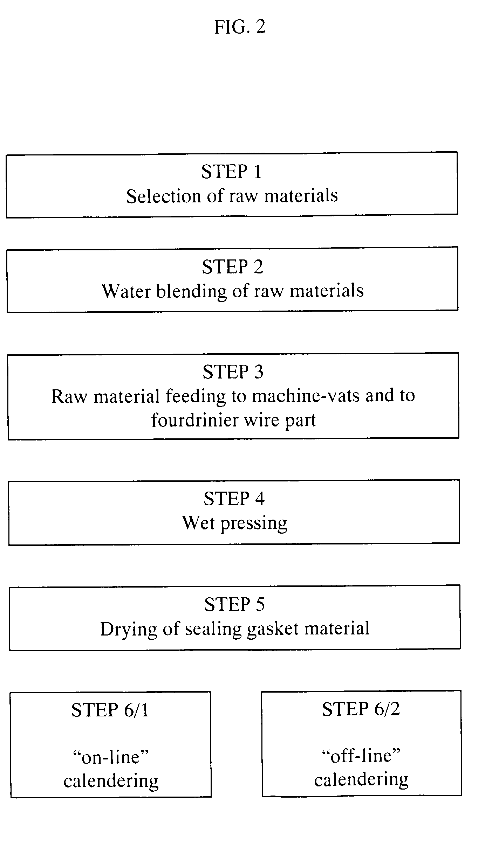

In FIG. 2 the main production steps are illustrated.

The advantages related to the use of the gasket material produced with the beater addition technique are essentially:the higher continuity of the working cycle; the inherent adaptability of the gasket material to automation; the consistent reduction of scrapes.

The gasket material subject of the present patent, especially developed for thermohydraulic applications is conceived to operate under correspondent relevant phisico-chemical parameters such as temperature, pressure, resistance to aggressive agents, strength and elastic recovery ( TABLE 1). After proper selection of the raw materials ( STEP 1) , they are thoroughly blended in water (TM STEP 2). The resulting composite is conducted through the machine-vats (VM STEP 3) to the fourdrinier wire part (TP).

After being partially dried, the gasket material is taken to the wet presses (PU STEP 4). The fourdrinier wire parts carry out a controlled compression, in the meantime de-moisturizing the material. In the next step (SE STEP 5) the material is conducted to the drying section, at a temperature in the range 120°C - 160°C, where the complete drying of the material is performed. After drying, the gasket material, transferred to the calender, undergoes a process that cause an increase in density that entails a performance enhancement.

Calendering can be performed through "on line" or "off line" processing.

In the "on line" procedure the uncooled material, from SE section, is conducted to the smoothness and subsequently wound in rolls.

In the "off line" procedure the gasket material is previously wound in rolls, and then, after cooling, is calendered.

The different calendering processing determines basic structural variations in the material properties that are functional to the various applications and to the subsequent cutting procedure performed by the customers.

The gasket material produced with the beater addition technique has a lower environmental impact with respect to other materials produced through extrusion or calendering such as IT sheet proceeding, since the former is produced through water blending rather than chemical solvent blending.

TABLE 1. List of main chemical-physical characteristics of gasket material in rolls produced with the beater addition technique for thermohydraulic applications.

### FIGURE CAPTIONS

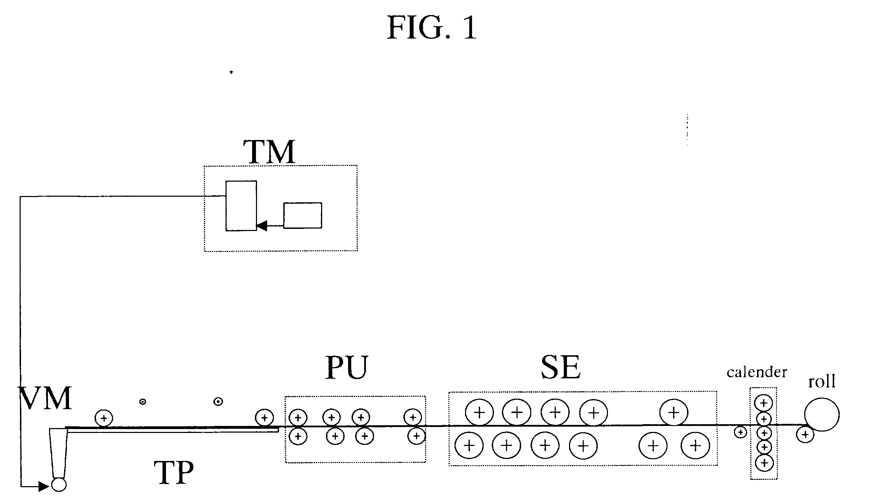

FIG.1 Schematic view of the production plant.

FIG.2 Main steps of the production processes.

### TABLE 1

* **COMPOSITION** : Jointing sheet composed by mineral fibres and fillers bonded by NBR latex
* **TEMPERATURE & PRESSURE** : up to 175°C / 50 bar non associated
* **TECHNICAL CHARACTERISTICS NATURAL STATE :**
   - Density : UNI Norme 6442 (ISO 534-80) - from 1.55 to 1.65 g/cmc
   - Compressibility : ASTM Norme F36/J - 10/22%
   - Elastic recovery : ASTM Norme F36/J - 30%
   - Cross traction resistence : (CD) UNI Norme 6438 (ISO 1924/1-83) - more than 8.7 MPa
* **FLUID PROPERTIES :**
   - ASTM OIL N°3 - 5h/150°C (ASTM F 146/1)
      - Thickness increase :: 12%
      - Weight increase :: 19%
   - ASTM FUEL B - 5h/150°C (ASTM F 146/1)
      - Thickness increase :: 10%
      - Weight increase :: 16%
   - COOLING LIQUID - 5h 150°C ( ASTM 146/1)
      - Thickness increase :: 18%
      - Weight increase :: 25%
* **CHEMICAL AGENT LIST OF COMPATIBILITY**
   **R = (Recomended)**
   **S = (Suitability depends on operating conditions))**
   **N = (Not suitable)**

| CHEMICAL PRODUCT | R. | S. | N. | CHEMICAL PRODUCT | R. | S. | N. | CHEMICAL PRODUCT | R. | S. | N. |
|---|---|---|---|---|---|---|---|---|---|---|---|
| Ethanol | • | | | Isopropanol | • | | | Phosphoric Acid | | | • |
| Ethyl Alchol | • | | | Isoprolpyl Acetate | | | • | Picric Acid | • | | |
| Ethyl Benzene | | | • | Isopropylanime | • | | | Plasticizer | | • | |
| Ethyl Chloride | • | | | Kerosene | • | | | Poly Glycols | • | | |
| Ethyl Ether | | • | | Lactic Acid | • | | | Poly Vinyl Acetate | | • | |
| Ethylene Diamine | • | | | Linseed Oil | • | | | Propane | • | | |
| Ethylene Glycol | • | | | Liquid Oxygen | | | • | Propylene Glycol | | | • |
| Ethylene Oxide | • | | | Liquified Petroleum Gas | • | | | Salt | • | | |
| Ferric Chloride | • | | | Lubrificanting oil | • | | | Sae Water | • | | |
| Ferric Sulphate | • | | | Lye Caustic | • | | | Silicone Grease | • | | |
| Fluorolube | • | | | Magnesium Hydroxyde | • | | | Silicone Oil | • | | |
| Formaldehyde | • | | | Magnesium Sulphate | • | | | Soap Solution | • | | |
| Formic Acid | • | | | Maleic Acid | | • | | Soda Ash | • | | |
| Freon 11 & oil | • | | | Methane | • | | | Sodium Bicarbonate | • | | |
| Freon 113 & oil | • | | | Methanol | • | | | Sodium Chloride | • | | |
| Freon 12 & oil | • | | | Methyl Butyl Chetone | | | • | Sodium Hydroxide | • | | |
| Freon 22 & oil | | | • | Methyl Dichloride | | | • | Sodium Hypochlorite | • | | |
| Fuel Oil | • | | | Methyl Etyl Ketone | | | • | Sodium Silicate | • | | |
| Gasoline | • | | | Methyl Isob. Ketone | | | • | Sodium Tetraborate | • | | |
| Glucose | • | | | Methyl Isopr. Ketone | | • | | Steam | • | | |
| Glycerin | • | | | Methylacetate | | | • | Stearic Acid | • | | |
| Glycols | • | | | Mil L-78-øB | • | | | Styrene - Monomer | | | • |
| Helium | • | | | Mine Water Acid | | | • | Sulphuric Acid | | | • |
| Heptane | • | | | Mineral Spirits | • | | | Sulphurous Acid | • | | |
| Hexane | • | | | Motor Oil | • | | | Tannic Acid | • | | |
| Hexene | • | | | Muriatic Acid | • | | | Tartaric Acid | • | | |
| Hydrazine | • | | | Naptenic Acid | • | | | Tetra Ethyl Lead | | • | |
| Hydrobromic Acid | | • | | Naphta | | • | | Tetrahydrofuran | | • | |
| Hydrocianic Acid | • | | | Navy Oil | • | | | Toluene | | | • |
| Hydrofluoric Acid | | | • | Nitric Acid | | | • | Trisodium Phosphate | • | | |
| Hydrogen Fluoride | | | • | Nitro Benzene | | | • | Turpentine | • | | |
| Hydrogen Peroxide | | | • | Nitrogen Gas | • | | | Urea | | • | |
| Hydroxyacetic Acid | | • | | Oleic Acid | | • | | Vinegar | | | • |
| Hypochlorous Acid | | | • | Oxalic Acid | • | | | Vinyl Chloride | | • | |
| Insecticides Aromat | | | • | Oxigen, Liquid | | • | | Vinylidene Chloride | | • | |
| Insecticides Noaromat | • | | | Palmitic Acid | • | | | Water | • | | |
| Iodine | | • | | Perchloroethylene | | • | | Zinc Chloride | • | | |
| Isobutyl Alcohol | • | | | Phenol | | | • | | | | |
| Isoctane | • | | | Phenolic Resins | | • | | | | | |

## Claims

1. Gasket material in rolls for sealing gasket for thermohydraulic applications produced by using the beater addition technique.

2. Gasket material as claimed in claim no. 1 produced by blending mineral and inorganic fibres bonded with elastomers (NBR).

3. Gasket material as claimed in claim no.1, 2 produced in rolls having considerable length (up to 1000 m.).

4. Gasket material as claimed in claim no. 1, 2, 3 characterized by the width up to 2 m.

5. Gasket material as claimed in claim no. 1, 2, 3, 4 having thickness in range of 0.5-3 mm.

6. Gasket material as claimed in claim no. 1, 2, 3, 4, 5 having density in the range of 1.4-2.2 gr/cm³.

7. Gasket material as claimed in claim no. 1, 2, 3, 4, 5, 6 that allows winding in rolls.

8. Gasket material as claimed in claim no. 1, 2, 3, 4, 5, 6, 7 that operate at temperature up to 175°C.

9. Gasket material as claimed in claim no. 1, 2, 3, 4, 5, 6, 7, 8 that operate to pressure up to 50 bar non associated to operating temperature.

10. Gasket material as claimed in claim no. 1, 2, 3, 4, 5, 6, 7, 8, 9 that can be employed in contact with a large class of chemical agents (TABLE 1).
